# EUROPEAN PATENT SPECIFICATION

(11) **EP 2 625 150 B1**
(45) Date of publication and mention of the grant of the patent: **16.05.2018**
(21) Application number: 11830334.6
(22) Date of filing: 21.09.2011
(51) Int. Cl.: C03C 11/00, C03B 32/00, G02B 1/00

(54) **POROUS GLASS, METHOD FOR MANUFACTURING POROUS GLASS, OPTICAL MEMBER, AND IMAGE CAPTURE APPARATUS**
PORÖSES GLAS, VERFAHREN ZUR HERSTELLUNG DES PORÖSEN GLASES, OPTISCHES ELEMENT UND BILDGEBUNGSVORRICHTUNG
VERRE POREUX, PROCÉDÉ DE FABRICATION DE VERRE POREUX, ÉLÉMENT OPTIQUE ET APPAREIL DE CAPTURE D'IMAGES

(30) Priority: 07.09.2011 JP 2011195062; 04.10.2010 JP 2010224954
(43) Date of publication of application: 14.08.2013
(73) Proprietor: Canon Kabushiki Kaisha, Tokyo 146-8501 (JP)
(72) Inventor: TAKASHIMA, Kenji, Tokyo 146-8501 (JP); ZHANG, Zuyi, Tokyo 146-8501 (JP); KOTANI, Yoshinori, Tokyo 146-8501 (JP); SUGIYAMA, Akira, Tokyo 146-8501 (JP)
(74) Representative: WESER & Kollegen
(86) International application number: PCT/JP2011/005305
(87) International publication number: WO 2012/046400

(56) References cited:
- GB-A- 2 065 097
- JP-A- 1 163 727
- JP-A- S5 711 840
- JP-A- 59 164 648
- JP-A- 61 243 438
- JP-A- 61 251 533
- US-A- 4 073 579
- US-A- 4 665 039
- TANAKA H ET AL: "Precipitation of colloidal silica and pore size distribution in high silica porous glass", JOURNAL OF NON-CRYSTALLINE SOLIDS, NORTH-HOLLAND PHYSICS PUBLISHING. AMSTERDAM, NL, vol. 65, no. 2-3, 1 August 1984 (1984-08-01), pages 301-309, XP024062050, ISSN: 0022-3093, DOI: 10.1016/0022-3093(84)90054-1 [retrieved on 1984-08-01]
- SCHMID H K: "MICROSTRUCTURE OF GLASS-CERAMICS IN THE SYSTEM B-NA-SI-TA OXIDES", JOURNAL OF THE AMERICAN CERAMIC SOCIETY, BLACKWELL PUBLISHING, MALDEN, MA, US, vol. 71, no. 6, 1 June 1988 (1988-06-01), pages 414-421, XP000032307, ISSN: 0002-7820, DOI: 10.1111/J.1151-2916.1988.TB05887.X
- MINOT ET AL: "Single-layer, gradient refractive index antireflection films effective from 0.35 to 2.5 [mu]", JOURNAL OF THE OPTICAL SOCIETY OF AMERICA, AMERICAN INSTITUTE OF PHYSICS, NEW YORK; US, vol. 66, no. 6, 1 January 1976 (1976-01-01), pages 515-519, XP008146661, ISSN: 0093-5433, DOI: 10.1364/JOSA.66.000515

## Description

### Technical Field

The present invention relates to a porous glass and a method for manufacturing the porous glass. In particular, the present invention relates to a porous glass for an optical member and a method for manufacturing the porous glass. Furthermore, the present invention relates to an image capture apparatus by using the porous glass.

### Background Art

As for a method for manufacturing a porous glass, a method taking advantage of a phase separation phenomenon is mentioned. In general, a base material for the porous glass taking advantage of the phase separation phenomenon is borosilicate glass made from silica, boron oxide, an alkali metal oxide, and the like. Regarding production, the phase separation phenomenon is effected by a heat treatment in which a molded borosilicate glass is held at a constant temperature (hereafter referred to as a phase separation treatment), and a non-silica-rich phase is eluted through etching with an acid solution. The skeleton constituting the porous glass is primarily silica. The skeleton diameter, the pore diameter, and the porosity of the thus obtained porous glass are affected by the composition before the phase separation treatment and the temperature and the time of the phase separation treatment significantly. Such phase separation glass has relatively high strength. Therefore, the phase separation glass is of interest as an optical material having strength in spite of a low refractive index.

As for the phase separation glass having a high porosity, for example, the glass produced from a base material glass having a relatively small content of silica component is disclosed in NPL 1.

In addition, PTL 1 and PTL 2 disclose a plurality of porous glass having different pore diameters and porosities, although detailed compositions are not disclosed.

### Citation List

### Patent Literature

PTL 1: Japanese Patent Laid-Open No. 11-057432
PTL 2: Japanese Patent Laid-Open No. 2007-242454

### Non Patent Literature

NPL 1: Supervised by Tetsuro Izumitani, "Atarashii Garasu to Sono Bussei "New Glass and Properties Thereof)", Chapter 2

### Summary of Invention

### Technical Problem

The phase separation treatment with respect to a phase separation glass in the related art is performed by holding at a constant temperature for several hours to several tens of hours. As the treatment temperature becomes high and the treatment time becomes large, the skeleton diameter (thickness of structure portion) and the pore diameter (size of hole) of a finally obtained porous glass increase and, at the same time, the porosity also increases. That is, If the porosity is increased in order to reduce the refractive index, the skeleton diameter (thickness of structure portion) increases and the pore diameter (size of hole) also increases, so that the skeleton portion becomes coarse and the strength is reduced. Regarding a glass having the same composition, it is difficult to increase the porosity while the skeleton diameter is reduced and the pore diameter is not increased significantly, that is, to increase the porosity while the skeleton portion is made dense as much as possible. The glass which is disclosed in NPL 1 and in which the content of silica component in the base material is relatively small. The porous glasses disclosed in PTL 1 and PTL 2 in themselves have low strength and in general, it is necessary that they are combined with a support.

TANAKA H et al, JOURNAL OF NON-CRYSTALLINE SOLIDS, vol. 65, no. 2-3, 1 August 1984, pages 301-309 discloses precipitation of colloidal silica and pore size distribution in high silica porous glass.

A porous glass which can be used alone as an optical member and which has high strength has been required. Furthermore, in order to control optical characteristics, in particular in the case where a low-refractive index material is employed, a phase separation technology to control a porosity in a wide range has been required.

The present invention provides a porous glass having high strength and a low refractive index, an optical member by using the porous glass, and a method for manufacturing the porous glass.

### Solution to Problem

A porous glass according to the present invention is defined in claim 1.

An optical member according to the present invention is defined in claim 2 and an image capture apparatus is defined in claim 3.

### Advantageous Effects of Invention

According to the present invention, a porous glass having high strength and a wide control range of low refractive index can be provided. In particular, a glass having high strength and a porous structure with an increased porosity can be produced.

### Brief Description of Drawings

[fig. 1] Fig. 1 is an electron micrograph of a surface of porous glass produced in Example 1.
[fig. 2] Fig. 2 is a diagram for explaining a skeleton diameter.
[fig. 3] Fig. 3 is a diagram showing the relationship between the skeleton diameter and the porosity obtained in Examples 1 to 11 and Comparative examples 1 to 8.
[fig. 4] Fig. 4 is an electron micrograph of a surface of porous glass produced in Comparative example 1.
[fig. 5] Fig. 5 is an electron micrograph of a surface of porous glass in the related art.

### Description of Embodiments

The present invention provides a porous glass, which has high strength and which realizes a low refractive index, a method for manufacturing the porous glass, and an optical member by using the porous glass.

Regarding the method useable for manufacturing the porous glass according to the present invention, initially, a glass body, which can be phase-separated through heating and which contains a plurality of components, is heat-treated at a first temperature to effect phase separation. Thereafter, the glass body, which has been heat-treated at the above-described first temperature, is heat-treated at a second temperature, higher than the above-described first temperature, to effect phase separation. Subsequently, the glass body, which has been heat-treated at the above-described second temperature, is brought into contact with a treating solution which dissolves at least one of the above-described plurality of materials. In this regard, the total time of the heat treatment time at the above-described first temperature and the heat treatment time at the above-described second temperature is 7 hours or more. One embodiment to execute the present invention will be described below. The glass body (hereafter may be referred to as phase-separable glass) serving as a base material for the porous glass according to the present invention is not specifically limited insofar as the material can be phase-separated through heating. Examples thereof include silicon oxide based porous glass I (base material glass composition:
silicon oxide-boron oxide-alkali metal oxide), silicon oxide based porous glass II (base material glass composition: silicon oxide-boron oxide-alkali metal oxide-(alkaline earth metal oxide, zinc oxide, aluminum oxide, zirconium oxide)), and titanium oxide based porous glass (base material glass composition: silicon oxide-boron oxide-calcium oxide-magnesium oxide-aluminum oxide-titanium oxide). Most of all, a borosilicate glass, which is amorphous containing silicon oxide, boron oxide, and alkali metal as primary components, can be used as a phase-separable base material glass. Here, the "phase separation" will be described with reference to the case where the borosilicate glass containing silicon oxide, boron oxide, and an oxide including alkali metal is used as the glass body. The "phase separation" refers to the fact that a phase having the composition of an oxide containing alkali metal and boron oxide larger than the composition before phase separation (non-silica-rich phase) and a phase having the composition of an oxide containing alkali metal and boron oxide smaller than the composition before phase separation (silica-rich phase) are separated.

In general, the borosilicate glass is expressed in a weight ratio in terms of silicon oxide (SiO₂), boron oxide (B₂O₃), and alkali metal oxide.

Examples of phase-separable borosilicate glass include SiO₂ (55 to 80 percent by weight)-B₂O₃-Na₂O-(Al₂O₃) based glass, SiO₂ (35 to 55 percent by weight)-B₂O₃-Na₂O based glass, SiO₂-B₂O₃-CaO-Na₂O-Al₂O₃ based glass, SiO₂-B₂O₃-Na₂O-RO (R: alkaline earth metal, Zn) based glass, and borosilicate glass of SiO₂-B₂O₃ - CaO-MgO-Na₂O-Al₂O₃-TiO₂ (TiO₂ is up to 49.2 percent by mole) based glass.

The porous glass according to the present invention is produced by preparing glass raw materials in such a way as to ensure the above-described composition, obtaining a glass body through mixing and melting, effecting phase separation of the resulting glass body through heating, and removing a non-silica-rich phase.

### Step to Obtain Glass Body Through Mixing and Melting of Glass Raw Materials

Glass raw materials are mixed and melted to obtain a glass body. Production can be performed by a method in the related art except that the raw materials are prepared in such a way as to ensure the above-described composition. Specifically, the raw materials are prepared in such a way as to ensure the above-described composition, the prepared raw materials are heat-melted and, as necessary, are molded into a desired form, so that the glass body is produced. In the case where the heat-melting is performed, the heating temperature may be set appropriately in accordance with the raw material composition and the like. However, the heating temperature is specified to be preferably within the range of usually 1,350 to 1,450 degrees (Celsius), and particularly 1,380 to 1,430 degrees (Celsius).

For example, as for the raw materials, sodium carbonate, boron oxide, and silicon oxide may be mixed homogeneously and be heat-melted at 1,350 to 1,450 degrees (Celsius). In this case, any raw material may be used insofar as the glass body having the above-described composition is obtained.

Regarding the shape of the obtained porous glass, any shape, e.g., the shape of a tube, a plate, a sphere, or a film, may be employed. Therefore, as for the shape of the glass body, any shape, e.g., the shape of a tube, a plate, a sphere, or a film, is considered. In the case where the shape of the glass body is made into the shape of a tube, a plate, a sphere, a film, or the like, the glass raw materials are mixed and melted and, thereafter, molding into various shapes may be performed at the temperature of about 1,000 to 1,200 degrees (Celsius). For example, a method in which after the above-described raw materials are melted, the temperature is lowered from the melting temperature, and molding is performed while the temperature is held at 1,000 to 1,200 degrees (Celsius) may be adopted.

### Step to Heat-Treat at First Temperature, Step to Heat-Treat at Second Temperature

The glass body is heat-treated, so as to effect phase separation.

The present invention includes the step to heat-treat at a first temperature to effect phase separation and a step to heat-treat the glass body, which has been heat-treated at the above-described first temperature, at a second temperature, higher than the above-described first temperature, to effect phase separation.

In general, the phase separation phenomenon of the glass is effected through a heat treatment in which a temperature of about 500 to 700 degrees (Celsius) is held for several hours to several tens of hours. A spinodal structure or a binodal structure is formed through phase separation. The manner of occurrence of phase separation is changed depending on the temperature and the holding time, and the skeleton diameter, the pore diameter, and the porosity of the resulting porous glass are changed.

In the phase-separated borosilicate glass, the non-silica-rich phase having the composition of an oxide containing alkali metal and boron oxide larger than the composition before the phase separation is soluble into an aqueous solution containing, for example, an acid. That is, the glass body is brought into contact with, for example, an aqueous solution which can dissolve boron oxide constituting the glass body relatively easily but which does not dissolve silicon oxide easily as compared with boron oxide. Consequently, the non-silica-rich phase undergoes reaction and is eluted, so that only the silica-rich phase remains as a skeleton and a porous glass is formed. This structure is identified easily by an observation technique of scanning electron microscope (SEM) or the like.

Hereafter the phase soluble into the aqueous solution may be referred to as an soluble phase, and a phase insoluble into the aqueous solution may be referred to as an insoluble phase.

In general, the phase separation is performed by holding for a long term at a constant temperature within the temperature range in which the phase separation is effected. As the temperature becomes high in the temperature range of phase separation and as the holding time becomes large, the thickness of the structure serving as the skeleton of the porous glass (skeleton diameter) and the size of holes surrounded by the skeleton (pore diameter) increase and, at the same time, the porosity tends to increase. Although, the mechanism of this phenomenon is not certain, a hypothesis as described below is considered. It takes about several hundreds of hours until an equilibrium state of phase separation at some temperature is reached. It is believed that in the time range of several hours to several tens of hours of the phase separation treatment performed at present, as the time increases, the equilibrium state of phase separation is approached, and phase separation becomes more apparent, that is, the skeleton diameter and the pore diameter increase. Furthermore, an increase in temperature exerts an effect of increasing the reaction rate, and as the temperature becomes high when the treatment time is the same, the equilibrium state of phase separation is approached and, thereby, the state of phase separation becomes apparent, that is, the skeleton diameter and the pore diameter increase. In addition, an increase in temperature brings the compositions of the phases in the equilibrium state of phase separation close to each other. Therefore, it is believed that the silica content in the non-silica-rich phase increases and, thereby, portions removed by acid etching increase relatively, so as to increase the porosity.

Consequently, it is difficult to obtain a porous glass having a small skeleton diameter and a large porosity by the phase separation treatment method in the related art, in which holding for a long term at some constant temperature within the temperature range of phase separation is performed.

The method for manufacturing a porous glass for an optical member according to the present invention includes at least two steps in the phase separation treatment, wherein a step to heat-treat at a first temperature is performed and, thereafter, a step to heat-treat at a second temperature higher than the first temperature is performed at least one time.

The first temperature and the second temperature include predetermined temperatures and the state in which the temperatures are changed in predetermined temperature zones. In the case where the temperatures are changed, the heat-applying treatment can be performed while the temperature raising rate or the temperature lowering rate is kept. In general, the phase separation phenomenon, or the spinodal decomposition of the structure occurs in the region of 500 degrees (Celsius) to 700 degrees (Celsius). That is, the temperature to effect the phase separation is in the region of 500 degrees (Celsius) to 700 degrees (Celsius) in general. It is necessary that the first temperature and the second temperature are within this temperature range. In this regard, the width of the predetermined temperature zone is preferably 20 degrees (Celsius) or less, more preferably 10 degrees (Celsius) or less, and further preferably 5 degrees (Celsius) or less. The first temperature and the second temperature refers to the predetermined temperatures in the case where the heating (heat treatment) is performed while the temperatures are not changed from the predetermined temperatures. Meanwhile, in the case where the heating (heat treatment) is performed while the temperatures are changed within the predetermined temperature zones, the first temperature and the second temperature refer to their respective average temperatures. The second temperature is set in such a way as to become higher than the first temperature. The heating time of each step is 1 minute or more, and more preferably 5 minutes or more. In this regard, the total time of the heat treatment time at the first temperature and the heat treatment time at the second temperature is preferably 7 hours or more. In the case where the total time of the two steps do not reach 7 hours, formation of the silica-rich phase in phase separation becomes insufficient. Consequently, a glass body is broken during elution of a non-silica-rich phase in the following step to bring the glass body into contact with the aqueous solution.

The spinodal structure is formed in the step to heat-treat at the first temperature and, thereby, the skeleton diameter is roughly determined. In the step to heat-treat at the second temperature, a change in porosity is larger than a change in skeleton diameter. In particular, the heat treatment is performed at a temperature higher than the above-described first temperature, so that the porosity increases. Although the mechanism is not certain, the following phenomenon is considered. The spinodal structure is formed in the heat treatment at the first temperature. Thereafter, the temperature is set to a higher temperature zone and, therefore, the compositions of phase separation is moved to the compositions at the equilibrium state at the higher temperature. As the temperature becomes high, the compositions at the equilibrium state of phase separation become close to each other. Furthermore, as the temperature becomes high, the reaction rate increases, so that the skeleton diameter and the porosity may increase. However, in the case where the spinodal structure has been formed, regarding occurrences of movements of substances between the individual phases to establish an equilibrium state, a movement from the silica-rich phase to the non-silica-rich phase may occur relatively quickly. It is believed that a phenomenon in which silica constituting the skeleton is eluted occurs at the same time with increases in the skeleton diameter, the pore diameter, and the porosity and, thereby, the skeleton diameter is hardly changed and only the porosity increases.

As necessary, at least one heat treatment step may be added before the step to heat-treat at the first temperature insofar as the formation of the spinodal structure is not affected significantly. The temperature thereof may be higher than the temperature zone of the first step. Moreover, a similar heat treatment step may be further added between the step to heat-treat at the first temperature and the step to heat-treat at the second temperature or after the step to heat-treat at the second temperature.

Regarding the first temperature, the heating can be performed at a temperature as low as possible among the temperatures which effect phase separation. Meanwhile, it is believed that regarding the step to heat-treat at the second temperature and afterward, the porosity increases to a large extent by performing the heating at a temperature as close to the upper limit temperature as possible among the temperatures which effect phase separation. In this regard, in order to further increase the porosity without increasing the skeleton diameter, it is desirable that the process time of the step to heat-treat at the second temperature and afterward is smaller than the process time of the heat-treat at the first temperature.

According to this multistage heat treatment, a porous glass having the skeleton diameter and the porosity, which are not obtained by applying the phase separation treatment method to glasses having various compositions in the related art, can be produced.

### Step to Bring into Contact with Aqueous Solution

The glass body which has been heat-treated at the second temperature is brought into contact with an aqueous solution to dissolve a part of the plurality of materials constituting the glass body. Consequently, the soluble phase of the glass body which has been heat-treated at the second temperature, that is, the glass body subjected to phase separation, is dissolved and a porous glass in which the insoluble phase remains as a structure is produced.

In general, a method for removing portions serving as holes from the phase-separated glass body is to elute the soluble phase through contact with an aqueous solution.

In general, a method for bringing the aqueous solution into contact with the glass is to immerse the glass in the aqueous solution, although not specifically limited insofar as the method brings the glass into contact with the aqueous solution, for example, the aqueous solution may be poured on the glass. As for the aqueous solution, any already available solution, e.g., water, acid solutions, or alkaline solutions, capable of eluting the soluble phase may be used. A plurality of types of steps to bring into contact with the aqueous solutions may be selected in accordance with the purposes.

Regarding general etching of the phase-separated glass, an acid treatment can be used from the viewpoint of a small damage on the insoluble phase portion and the degree of selective etching. An alkali metal oxide-boron oxide-rich phase, which is an acid-soluble component, is removed by elution through contact with the solution containing an acid, whereas erosion of the insoluble phase is at a relatively low level and high selective etchability can be achieved.

As for the aqueous solution containing an acid, for example, inorganic acids, e.g., hydrochloric acid and nitric acid, can be used. Usually, the solution containing an acid can be used in the form of an aqueous solution in which water serves as a solvent. The concentration of the solution containing an acid may be usually set within the range of 0.1 mol/l to 2.0 mol/l (0.1 to 2 N) appropriately.

In this step, the temperature of the aqueous solution may be specified to be within the range of room temperature to 100 degrees (Celsius), and the treatment time may be specified to be about 1 to 100 hours.

The porous glass according to the present invention will be described.

The porous glass according to the present invention has a structure in which the skeleton diameter X nm is 10 nm or more and 100 nm or less and the porosity Y percent is more than 0.16X + 32.4 percent and 60 percent or less.

The refractive index of the air is smaller than those of porous glass materials, e.g., silica, and as the porosity increases, the refractive index of the entire porous glass decreases. Regarding porous glasses having the same level of porosities, the porous glass has higher strength, in the case where a spinodal structure skeleton forms a denser network in a space, that is, the structure (skeleton) has a smaller thickness, which corresponds to the skeleton diameter. Although the mechanism is not certain, when the skeleton diameter increases, the period of the skeleton and the hole increases. It is believed that a local stress tends to be thereby applied to the skeleton, so as to reduce the strength. In the case where the skeleton diameter X nm is 10 nm or more and 100 nm or less, a porous glass having high strength is obtained. If the skeleton diameter is less than 10 nm, even when a spatial network of the spinodal structure is formed, the activity is high, water and the like are adsorbed, and the stability as the material is poor. On the other hand, if the skeleton diameter is more than 100 nm, the pore diameter increases, scattering of light occurs so as to cause whitening and, therefore, the suitability for an optical member is poor.

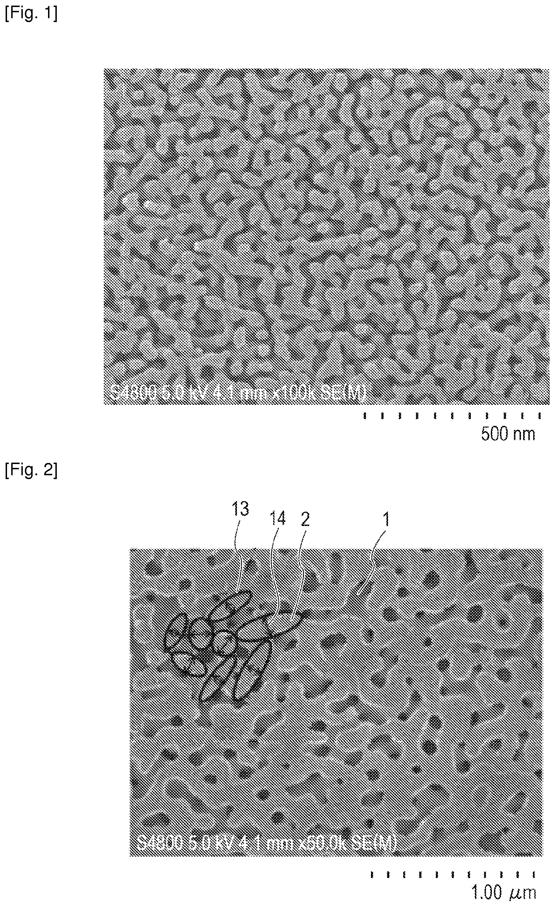

In addition, in the case where the porosity Y percent is more than 0.16X + 32.4 percent and 60 percent or less, a porous glass having a low refractive index and high strength can be obtained. Here, the spinodal structure refers to a structure formed from complicatedly entangled structures serving as the skeleton, as shown in Fig. 1, for example.

The skeleton diameter of the porous glass may be measured by using, for example, an image of SEM (electron micrograph). Electron micrographs are taken under magnifications of 50,000, 100,000, and 150,000. Regarding the skeleton portion of the porous glass in the image, the skeleton of a porous body surface within a predetermined range is approximated by a plurality of ellipses, the minor axes of the resulting individual ellipses are measured, and this is repeated with respect to 30 points or more. The skeleton diameter may be calculated from the average of the resulting values. Specifically, as shown in Fig. 2, for example, an electron micrograph of a porous body surface is used, the skeleton 2 is approximated by a plurality of ellipses 13, and an average value of the minor axes 14 of the individual ellipses is determined. In this regard, reference numeral 1 denotes a hole of the porous body.

Regarding calculation of the porosity, as a simple method, for example, processing to binarize an image of an electron micrograph may be used. In the electron micrograph, the skeleton portion of the porous glass is predominantly white, and the hole portion is predominantly black. However, even in the skeleton portion, there is a grayish portion, and even in the hole portion, there is a bright place with respect to a portion where the skeleton portion in the lower layer is in sight slightly. In order to isolate them completely, the image is converged to only white and black through binarization. The ratio of the area of black portion to the whole area (sum of areas of white and black portion) is calculated. Electron micrographs taken under magnifications of 50,000, 100,000, and 150,000 are used, and an average value thereof is taken as the porosity. The value of the refractive index is calculated from the porosity. With respect to the light with a wavelength of 550 nm, the refractive index of the air is about 1, and the refractive index of silica constituting the skeleton is about 1.46. The refractive index is obtained by summing the individual contributions by using the porosity. In the case of use as a low-refractive index material for an optical member, the lower refractive index is favorable and it is preferable that the refractive index is lower than 1.3.

Regarding the strength of the thus produced porous silica glass, the durability against a stress applied from the outside is indicated by using pencil strength. The pencil strength may be determined by a pencil scratch test on the basis of JIS-K5400. It is desirable that the pencil strength is H or more in order to be used alone for the optical member.

The optical member according to the present invention includes the above-described porous glass. Examples of optical members include optical members, e.g., polarizers used in various displays of televisions, computers, and the like and liquid crystal display apparatuses, finder lenses for cameras, prisms, fly-eye lenses, and toric lenses. Examples thereof further include various lenses of image taking optical systems, observation optical systems, e.g., binoculars, projection optical systems used for liquid crystal projectors and the like, and scanning optical systems used for laser beam printers and the like, in which the porous glasses are used. In particular, the porous glass according to the present invention may be used as a part of optical members used in an image capture apparatus, e.g., a digital camera or a digital video camera, including an imaging sensor. Moreover, the porous glass according to the present invention may be used as a part of optical members used for an image forming apparatus, e.g., a laser beam printer, including an exposure light source, a photo conductor on which a latent image is formed by the exposure light source, and a charging device to charge the photo conductor.

### Examples

The present invention will be more specifically described below with reference to examples. However, the present invention is not limited to the following examples.

### (Base Material Glass Production Examples 1 to 3)

Regarding Base material production examples 1 to 3, base material glasses having three types of phase-separable compositions were formed for examples and comparative examples according to the present invention. Raw material compounds were a silica powder (SiO₂), boron oxide (B₂O₃), and sodium carbonate (Na₂CO₃), and alumina (Al₂O₃) was also used for a part of glasses. The composition in terms of percent by weight of each metal element oxide in each Production example is shown in Table 1. Mixed powders were put into a platinum crucible and were melted at 1,500 degrees (Celsius) for 24 hours. Thereafter, the temperature of the glass was lowered to 1,300 degrees (Celsius), and the glass was poured into a graphite mold. Cooling was performed in the air for 20 minutes. Subsequently, the resulting borosilicate glass block was cut into 40 mm * 30 mm * 11 mm and both surfaces were polished to mirror-finished surfaces.

**[Table 1]**

| Glass name | SiO₂ wt% | B₂O₃ wt% | Na₂O wt% | Al₂O₃ wt% |
|---|---|---|---|---|
| Production example 1 | 59 | 30.5 | 9 | 1.5 |
| Production example 2 | 64 | 26 | 7 | 3 |
| Production example 3 | 65 | 27 | 8 | |

### EXAMPLES 1 to 11

Regarding Examples 1 to 11, as shown in Table 2, the glass produced in Production examples 1 to 3 were used, and phase separation treatments were performed by using the respective temperature profiles. The treatment included a plurality of times of step to hold at high temperatures.

It was concerned that an alteration layer was formed on the glass surface due to application of heat. Therefore, the surface of the treated glass was polished, so as to remove several hundreds of nanometers to several micrometers of surface.

A glass sample of 15 mm * 15 mm was cut from the resulting glass, and etching was performed with an aqueous solution containing an acid. As for the aqueous solution containing an acid, 50 g of 1 mol/L nitric acid was used. The nitric acid was put into a polypropylene container, and the temperature was specified to be 80 degrees (Celsius) in an oven in advance. The glass was put therein while being hung with a platinum wire in such a way as to be located at the center portion in the solution. The polypropylene container was covered with a lid and was stood for 24 hours while being held at 80 degrees (Celsius). The glass after being treated with nitric acid was put into water at 80 degrees (Celsius) and a rinsing treatment was performed.

### Comparative Examples 1 to 9

Regarding Comparative examples 1 to 9, as shown in Table 2, the glasses produced in Production examples 1 to 3 were used, and phase separation treatments were performed by using the respective temperature profiles. As in Example, polishing of the surface and etching with the acid were performed.

**[Table 2]**

| Sample | Glass used | First step | | Second step | | Third step | |
|---|---|---|---|---|---|---|---|
| | | Average temperature | Process time | Average temperature | Process time | Average temperature | Process time |
| Example 1 | Production example 1 | 560 | 50 | 600 | 5 | | |
| Example 2 | Production example 1 | 520 | 100 | 600 | 5 | | |
| Example 3 | Production example 1 | 520 | 50 | 600 | 5 | | |
| Example 4 | Production example 1 | 540 | 100 | 600 | 5 | | |
| Example 5 | Production example 1 | 540 | 50 | 600 | 5 | | |
| Example 6 | Production example 1 | 540 | 50 | 580 | 5 | 600 | 5 |
| Example 7 | Production example 1 | 540 | 50 | 590 | 5 | 600 | 10 |
| Example 8 | Production example 2 | 560 | 50 | 590 | 5 | | |
| Example 9 | Production example 3 | 600 | 50 | 620 | 10 | | |
| Example 10 | Production example 2 | 560 | 10 | 590 | 1.5 | | |
| Example 11 | Production example 2 | 560 | 6 | 590 | 1.5 | | |
| Comparative example 1 | Production example 1 | 540 | 50 | | | | |
| Comparative example 2 | Production example 2 | 500 | 25 | | | | |
| Comparative example 3 | Production example 2 | 525 | 24 | | | | |
| Comparative example 4 | Production example 2 | 560 | 50 | | | | |
| Comparative example 5 | Production example 3 | 620 | 100 | | | | |
| Comparative example 6 | Production example 3 | 620 | 150 | | | | |
| Comparative example 7 | Production example 3 | 600 | 50 | | | | |
| Comparative example 8 | Production example 3 | 620 | 50 | | | | |
| Comparative example 9 | Production example 1 | 560 | 3 | 600 | 0.5 | | |

It was ascertained by the observation with SEM that samples of Examples 1 to 11 and Comparative examples 1 to 8 were porous glasses. Furthermore, regarding samples of Examples 1 to 11 and Comparative examples 1 to 8, images of SEM (electron micrograph) were taken under magnifications of 50,000, 100,000, and 150,000. Regarding the skeleton portion of the porous glass in the taken image, the skeleton of a porous body surface within a predetermined range was approximated by a plurality of ellipses, the minor axes of the resulting individual ellipses were measured, and this was repeated with respect to 30 points or more. The skeleton diameter of each of the samples was calculated from the average of the resulting values. The results thereof are shown in Table 3. In this regard, the sample of Comparative example 9 was broken during etching and, therefore, observation with SEM was not performed nor was performed evaluation of the structure thereafter.

Subsequently, regarding the samples of Examples 1 to 11 and Comparative examples 1 to 8, processing to binarize an image of an electron micrograph was performed in order to evaluate the porosity. The electron micrographs taken under magnifications of 50,000, 100,000, and 150,000 were used, the skeleton portion of each of them was converged to white, and the hole portion was converged to black. Consequently, the information in the depth direction was eliminated and the information of the skeleton and pores of the outermost surface was obtained. An average value of the ratios of the area of black portion to the whole area (sum of areas of white and black portions) with respect to all images was calculated and was taken as the porosity of each sample, as shown in Table 3. The refractive index was calculated from the value of porosity, and is shown in Table 3.

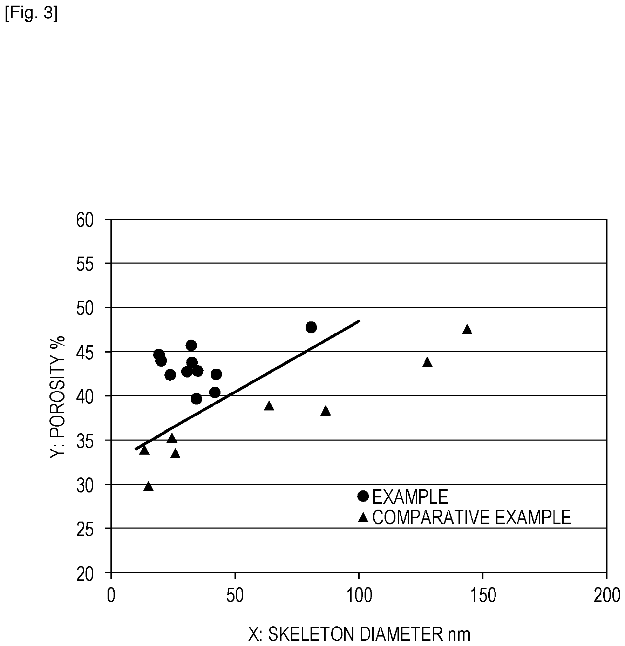

Fig. 3 shows the relationship between the skeleton diameter and the porosity of the samples of Examples 1 to 11 and Comparative examples 1 to 8. A solid line in Fig. 3 indicates Y = 0.16X + 32.4, and it is clear that the porosities of the samples of Examples are within the range of more than 0.16X + 32.4 percent and 60 percent or less. On the other hand, it is clear that the samples of Comparative examples do not fall into that range.

Then, regarding the samples of Examples 1 to 11 and Comparative examples 1 to 8, the pencil scratch test on the basis of JIS-K5400 was performed. The results are shown in Table 3.

The sample of Comparative example satisfied that any one of the refractive index was 1.3 or more and the skeleton diameter was 100 nm or more.

**[Table 3]**

| Sample | Skeleton diameter | Porosity | Refractive index | Pencil strength |
|---|---|---|---|---|
| Example 1 | 32.3 | 45.7 | 1.25 | 2H |
| Example 2 | 34.6 | 39.7 | 1.28 | 2H |
| Example 3 | 30.6 | 42.8 | 1.26 | 2H |
| Example 4 | 34.9 | 42.9 | 1.26 | 2H |
| Example 5 | 32.6 | 43.8 | 1.26 | 2H |
| Example 6 | 41.8 | 40.4 | 1.27 | 2H |
| Example 7 | 42.4 | 42.5 | 1.26 | 2H |
| Example 8 | 23.9 | 42.4 | 1.27 | 2H |
| Example 9 | 80.7 | 47.8 | 1.24 | 2H |
| Example 10 | 20.2 | 44.0 | 1.26 | 2H |
| Example 11 | 19.1 | 44.7 | 1.25 | 2H |
| Comparative example 1 | 24.8 | 35.3 | 1.30 | 2H |
| Comparative example 2 | 13.5 | 34.0 | 1.30 | 2H |
| Comparative example 3 | 15.3 | 29.8 | 1.32 | 2H |
| Comparative example 4 | 26.1 | 33.6 | 1.31 | 2H |
| Comparative example 5 | 127.7 | 43.9 | 1.26 | HB |
| Comparative example 6 | 143.8 | 47.6 | 1.24 | B |
| Comparative example 7 | 63.8 | 38.9 | 1.28 | HB |
| Comparative example 8 | 86.6 | 38.4 | 1.28 | HB |

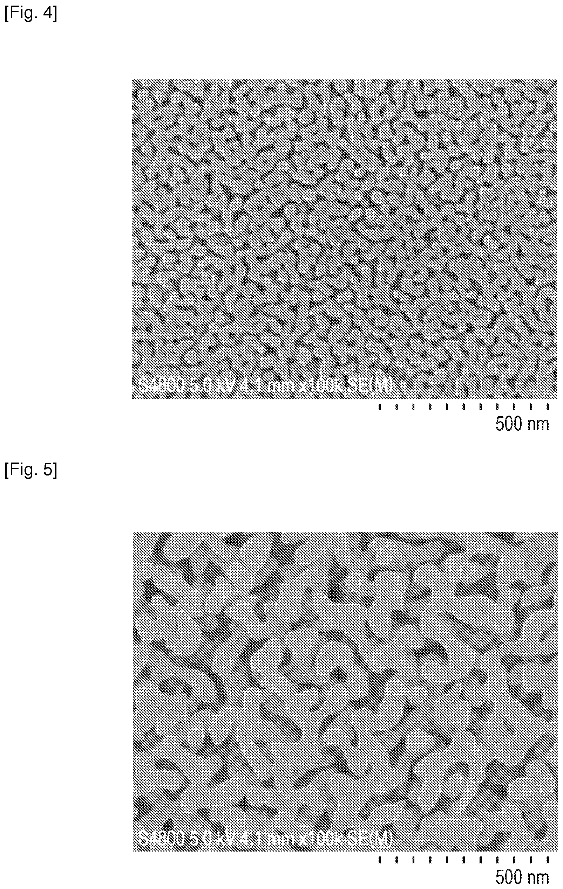

Fig. 1 shows an electron micrograph of a surface of the porous glass produced in Example 1. Fig. 4 shows an electron micrograph of a surface of the porous glass produced in Comparative example 1. Furthermore, Fig. 5 shows an electron micrograph of a surface of the porous glass produced in the same manner as that in Comparative example 1 except that the temperature was specified to be 600 degrees (Celsius). As is clear from them, the porosity of the porous glass produced through the step to heat-treat at the first temperature and the step to heat-treat at the second temperature was larger than that of the porous glass produced through only the step to heat-treat at the first temperature, but the skeleton diameter was hardly changed. On the other hand, regarding Fig. 5 corresponding to Comparative example 1 shown in Fig. 4 except that the first temperature was changed from 560 degrees (Celsius) to 600 degrees (Celsius), it was made clear that if it was intended to obtain the porosity at the same level of the porosity as shown Fig. 1, the skeleton diameter increased as well and, therefore, the structure became coarse and the strength decreased.

As is clear from Table 3, regarding the samples of Examples, the refractive indices were 1.28 or less and the pencil strength was 2H, whereas regarding the samples of Comparative examples, the refractive indices were 1.30 or more or the pencil strength was HB or less.

### Industrial Applicability

The porous glass for an optical member according to the present invention has high strength and a low refractive index, and the porous glass can be used alone. Therefore, it is possible to widely apply to optical members. Furthermore, the method for manufacturing the porous glass can control the porous glass structure for purposes other than phase separation phenomenon of a wide composition and the optical member.

## Claims

1. A porous glass manufacturable by
heat-treating a borosilicate glass body, which is formed from a plurality of components, at a first temperature to effect phase separation;
heat-treating the glass body, which has been heat-treated at the first temperature, at a second temperature, higher than the first temperature, to effect phase separation; and
bringing the glass body, which has been heat-treated at the second temperature, into contact with an aqueous solution,
wherein the total time of the heat treatment time at the first temperature and the heat treatment time at the second temperature is 7 hours or more, and
the total time of the heat treatment time at the second temperature is smaller than the total time of the heat-treat time at the first temperature,
**characterized by** comprising
a skeleton diameter X of 10 nm or more and 100 nm or less, and
a porosity Y of more than 0.16X percent/nm + 32.4 percent and 60 percent or less.

2. An optical member comprising the porous glass according to Claim 1.

3. An image capture apparatus comprising the optical member according to Claim 2 and an image sensor.

## Patentansprüche

1. Poröses Glas, das hergestellt werden kann durch
Wärmebehandeln eines aus mehreren Bestandteilen gebildeten Borosilikatglaskörpers bei einer ersten Temperatur, um eine Phasentrennung auszulösen;
Wärmebehandeln des Glaskörpers, der einer Wärmebehandlung bei der ersten Temperatur unterzogen wurde, bei einer zweiten Temperatur, die höher ist als die erste Temperatur, um eine Phasentrennung auszulösen; und
in Kontakt Bringen des Glaskörpers, der einer Wärmebehandlung bei der zweiten Temperatur unterzogen wurde, mit einer wässrigen Lösung,
wobei die Gesamtzeit der Wärmebehandlung bei der ersten Temperatur und der Wärmebehandlung bei der zweiten Temperatur 7 Stunden oder mehr beträgt, und
die Gesamtzeit der Wärmebehandlung bei der zweiten Temperatur kürzer ist als die Gesamtzeit der Wärmebehandlung bei der ersten Temperatur,
**dadurch gekennzeichnet, dass** das Glas umfasst:
einen Skelettdurchmesser X von 10 nm oder mehr und 100 nm oder weniger, und
eine Porosität Y von mehr als 0,16X Prozent/nm + 32,4 Prozent und 60 Prozent oder weniger.

2. Optisches Element, das das poröse Glas nach Anspruch 1 umfasst.

3. Bilderfassungsvorrichtung, die das optische Element nach Anspruch 2 und einen Bildsensor umfasst.

## Revendications

1. Verre poreux pouvant être obtenu par
chauffage d'un corps en verre au borosilicate, qui est-formé à partir d'une pluralité de composants, à une première température pour induire une séparation de phase ;
chauffage du corps en verre, qui a été chauffé à la première température, à une seconde température, supérieure à la première, pour induire une séparation de phase ; et
mise en contact du corps en verre, qui a été chauffé à la seconde température, avec une solution aqueuse,
dans lequel le temps total du temps de chauffage à la première température et du temps de chauffage à la seconde température est de 7 heures ou plus ; et
le temps total du temps de chauffage à la seconde température est inférieur au temps total du temps de chauffage à la première température,
**caractérisé en ce qu'**il comprend
un diamètre de squelette X de 10 nm ou plus et de 100 nm ou moins, et
une porosité Y supérieure à 0,16X %/nm + 32,4 % et de 60 % ou moins.

2. Elément optique comprenant le verre poreux selon la revendication 1.

3. Appareil de capture d'image comprenant l'élément optique selon la revendication 2 et un capteur d'image.
